# EUROPÄISCHE PATENTSCHRIFT

(11) **EP 1 928 577 B1**
(45) Veröffentlichungstag und Bekanntmachung des Hinweises auf die Patenterteilung: **21.03.2012**
(21) Anmeldenummer: 06793459.6
(22) Anmeldetag: 12.09.2006
(51) Int. Cl.: B01D 46/24, F01N 3/022

(54) **FILTERELEMENT UND RUßFILTER MIT GEOMETRISCH ÄHNLICHEN KANÄLEN**
FILTER ELEMENT AND SOOT FILTER HAVING GEOMETRICALLY SIMILAR CHANNELS
ELEMENT FILTRE ET FILTRE A PARTICULES POURVU DE CANAUX A GEOMETRIE IDENTIQUE

(30) Priorität: 20.09.2005 DE 102005044764; 28.07.2006 DE 102006035053
(43) Veröffentlichungstag der Anmeldung: 11.06.2008
(73) Patentinhaber: ROBERT BOSCH GMBH, 70442 Stuttgart (DE)
(72) Erfinder: REINSCH, Bernd, 71642 Ludwigsburg (DE); KOMORI, Teruo, 70378 Stuttgart (DE); THUENER, Lars, 70176 Stuttgart (DE)
(86) Internationale Anmeldenummer: PCT/EP2006/066289
(87) Internationale Veröffentlichungsnummer: WO 2007/033921

(56) Entgegenhaltungen:
- EP-A- 1 260 683
- EP-A2- 0 900 922
- WO-A1-02/10562
- US-A- 3 436 192
- US-A1- 2005 066 639

## Beschreibung

### Stand der Technik

Die Erfindung betrifft ein Filterelement zur Reinigung der Abgase einer Brennkraftmaschine nach dem Oberbegriff des Anspruchs 1 und einen Rußfilter mit einem Filterelement nach dem nebengeordneten Anspruch 14. Derartige Filterelemente werden beispielsweise als Rußfilter für Dieselbrennkraftmaschinen eingesetzt.

Die Filterelemente bestehen häufig aus einem keramischen Werkstoff und weisen eine Vielzahl von parallel zueinander verlaufenden Eintrittskanälen und Austrittskanälen auf.

Hergestellt werden Filterelemente aus keramischen Werkstoffen durch Extrudieren. Dies bedeutet, dass der Rohling des Filterelements ein prismatischer Körper mit einer Vielzahl von parallel zueinander verlaufenden Kanälen ist. Die Kanäle eines Rohlings sind zunächst an beiden Enden offen.

Damit das zu reinigende Abgas durch die Wände des Filters strömt, wird eine Gruppe von Kanälen am hinteren Ende des Filterelements verschlossen, während eine andere Gruppe von Kanälen am vorderen Ende des Filterelements verschlossen werden. Dadurch werden zwei Gruppen von Kanälen gebildet, nämlich die sogenannten Eintrittskanäle, welche am hinteren Ende verschlossen sind und die sogenannten Austrittskanäle, welche am Anfang des Filterelements verschlossen sind.

Zwischen den Eintrittskanälen und den Austrittskanälen besteht nur über die porösen Wände des Filterelements eine Strömungsverbindung, so dass das Abgas das Filterelement nur durchströmen kann, indem es aus den Eintrittskanälen durch die Wände des Filterelements hindurch in die Austrittskanäle strömt.

Die EP 1 260 683 offenbart einen Abgasnachbehandlungsfilter zum Filtern von in Axialrichtung strömenden Motorabgasen, mit einer axial erstreckender zylindrischen Filterrolle, die aus einem Flächengebilde spirelförmig gewickelt ist.

Um einen möglichst effektiven Betrieb des Filterelements zu gewährleisten, wird eine möglichst gleichmäßige Temperaturverteilung über den Querschnitt des Filterelements während des Betriebs der Brennkraftmaschine angestrebt.

Der Erfindung liegt die Aufgabe zugrunde, ein Filterelement für einen Rußfilter und einen Rußfilter bereitzustellen, bei denen die Temperaturverteilung über den Querschnitt des Filterelements verbessert und infolgedessen das Betriebsverhalten des mit einem erfindungsgemäßen Filterelement ausgerüsteten Rußfilters ebenso wie dessen Lebensdauer verlängert wird.

Diese Aufgabe wird erfindungsgemäß bei einem Filterelement zur Filterung von Ruß, insbesondere zur Filterung von Abgasen einer Dieselbrennkraftmaschine, mit einer parallel zur Hauptströmungsrichtung des Abgases verlaufenden Längsachse, mit einer Vielzahl von parallel zur Längsachse verlaufenden Einlasskanälen und mit einer Vielzahl von parallel zur Längsachse verlaufenden Auslasskanälen, wobei die Einlasskanäle an einer Eintrittsfläche des Filterelements beginnen und an einer Austrittsfläche des

Filterelements verschlossen sind, und wobei die Auslasskanäle an der Eintrittsfläche verschlossen sind und an der Austrittsfläche enden, dadurch gelöst, dass die außen an dem Filterelement angeordneten Kanäle eine größere Querschnittsfläche als die zentral angeordneten Kanäle aufweisen.

### Offenbarung der Erfindung

Die an dem Filterelement außen liegenden Kanäle mit den großen Querschnittsflächen bieten dem zuströmenden Abgas einen geringeren Strömungswiderstand, so dass gegenüber einem herkömmlichen Filterelement mit gleich großen Kanalquerschnitten ein größerer Anteil der zu filternden Abgase an der Peripherie des Filterelements gefiltert werden. Dadurch werden die Temperaturen an der Peripherie des Filterelements durch den erhöhten Durchsatz von Abgasen erhöht und so insgesamt eine Vergleichmäßigung der Temperaturen über den gesamten Querschnitt des Filterelements erreicht. In gleichem Maß nimmt der durch das Zentrum des Filterelements strömende Abgasstrom ab, was zu einer entsprechenden Absenkung der im Inneren des Filterelements herrschenden Temperaturen führt. Wenn hierbei die Querschnittsfläche der Eintrittskanäle größer ist als die Querschnittsfläche der benachbart dazu angeordneten Austrittskanäle, wird Kapazität des Filterelements für die Ablagerung von Ruß erhöht, ohne dass dadurch der Abgasgegendruck stark ansteigt.

Die Temperaturverteilung innerhalb des erfindungsgemäßen Filterelements kann weiter verbessert werden, indem die am weitesten außen liegenden Kanäle des Filterelements an beiden Seiten verschlossen sind. Dies bedeutet nichts anderes, als dass diese Kanäle nicht von dem Abgas durchströmt werden, sondern sich im Inneren dieser Kanäle Luft befindet, welche als Wärmedämmung dient. Dadurch wird die Wärmeabgabe des Teils des Filterelements an die Umgebung und in Folge dessen der Temperaturabfall an der

Peripherie des Filterelements stark verringert. Dadurch ergeben sich eine weiter verbesserte Temperaturverteilung und eine verkürzte Aufheizzeit des erfindungsgemäßen Filterelements.

In weiterer vorteilhafter Ausgestaltung der Erfindung ist vorgesehen, dass die radialen Wände zwischen zwei benachbarten Kanälen versetzt zueinander angeordnet sind. Dadurch wird das erfindungsgemäße Filterelement in radialer Richtung flexibler beziehungsweise die Wärmespannungen in radialer Richtung werden reduziert. Dies verbessert die Beständigkeit des erfindungsgemäßen Filterelements gegenüber schnellen Temperaturwechseln, die andernfalls möglicherweise zu Rissen und damit zum Versagen des Filterelements führen können.

In einer vorteilhaften Ausgestaltung der Erfindung nimmt die Querschnittsfläche der Kanäle mit zunehmendem Abstand zur Längsachse des Filterelements monoton zu. Dies bedeutet, dass über den funktionalen Zusammenhang zwischen Abstand des Kanals zum Mittelpunkt des Filterelements und dessen Querschnittsfläche die Temperaturverteilung innerhalb des Filterelements in weiten Grenzen beeinflusst werden kann.

Aus fertigungstechnischer Sicht kann es jedoch auch vorteilhaft sein, wenn die Querschnittsfläche der Kanäle mit zunehmendem Abstand zur Längsachse des Filterelements in einer oder mehreren Stufen zunimmt.

Es hat sich weiter als vorteilhaft erwiesen, wenn das Filterelement rotationssymmetrisch oder zentralsymmetrisch bezüglich seiner Längsachse ist.

Es hat sich weiter als vorteilhaft erwiesen, die stromaufwärts gelegene Oberfläche der (Einlass)kanäle uneben auszugestalten, so dass diese örtlich eine andere Steigung aufweist als eine Ebene, in der die Wand insgesamt liegt. Dadurch ist im Vergleich zu herkömmlichen Filtereinrichtungen die stromaufwärts gelegene Oberfläche größer. In der Folge kann dort eine größere Partikelmenge angelagert werden, ohne dass es zu einem unzulässigen Anstieg des Druckabfalls bei der Durchströmung der Filterwand kommt. Als Konsequenz hieraus wiederum muss das erfindungsgemäße Filterelement im Vergleich zu herkömmlichen Filtereinrichtungen seltener regeneriert werden, was den insgesamt für die Regenerierung erforderlichen Kraftstoffeinsatz senkt. Dabei ist diese Verringerung des Kraftstoffverbrauchs möglich, ohne dass die Gesamtabmessungen der Filtereinrichtung vergrößert werden. Die Vergrößerung der für die Ablagerung der Partikel zur Verfügung stehenden Fläche wird allein oder zumindest im Wesentlichen durch die unebene Ausführung der Oberfläche herbeigeführt. Die unebene Oberfläche führt daher zu keinen oder zumindest zu keinen wesentlichen Zusatzkosten bei der Herstellung.

Die eingangs genannten Vorteile können auch mit einem Rußfilter mit einem Filterelement, mit einem Gehäuse, mit einer Zuleitung, mit einer Ableitung, mit einer die Zuleitung mit dem Gehäuse verbindenden Diffusor und mit einem das Gehäuse mit der Ableitung verbindenden Konus dadurch gelöst werden, dass ein erfindungsgemäßes Filterelement eingesetzt wird.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen genannten Vorteile können sowohl Einzeln als auch in beliebiger Kombination miteinander erfindungswesentlich sein.

### Kurze Beschreibung der Zeichnungen

Es zeigen:
- Figur 1: einen Rußfilter mit einem erfindungsgemäßen Filterelement in einer Seitenansicht,
- Figuren 2: und 3 Ausführungsbeispiele erfindungsgemäßer Filterelemente in einer Ansicht von vorne,
- Figuren 4: und 5 Darstellungen der Querschnittsfläche der Kanäle als Funktion des Radius,
- Figuren 6: ein drittes Ausführungsbeispiel eines erfindungsgemäßen Filterelements und
- Figur 7: ein viertes Ausführungsbeispiel.

### Ausführungsformen der Erfindung

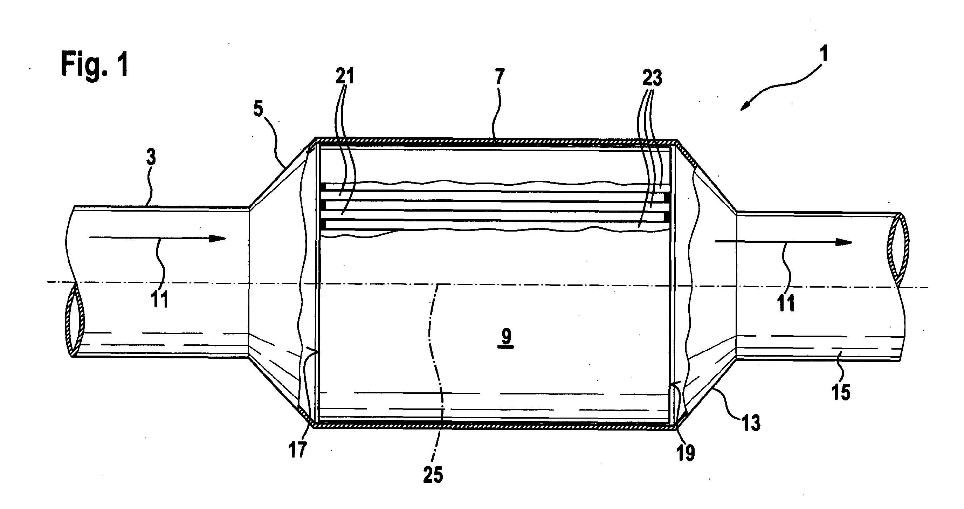

Figur 1 stellt einen Rußfilter 1 mit einer Zuleitung 3, einem Diffusor 5, einem Gehäuse 7 und einem erfindungsgemäßen Filterelement 9 in einer teilweise geschnittenen Seitenansicht dar.

Durchströmt wird der Rußfilter 1 in Richtung der Pfeile 11. An das Gehäuse 7 schließen ein Konus 13 und eine Ableitung 15 an. Das Filterelement 9 ist gasdicht mit dem Gehäuse verbunden, so dass das durch die Zuleitung 3 zuströmende Abgas (nicht dargestellt) durch das Filterelement 9 hindurchströmen muss.

Das Filterelement 9 weist eine Eintrittsfläche 17 und eine Austrittsfläche 19 auf. Das Filterelement 19 ist von einer Vielzahl von Kanälen durchzogen, die sich von der Eintrittsfläche 17 bis zur Austrittsfläche 19 erstrecken.

Damit das Abgas durch die Wände (ohne Bezugszeichen) des Filterelements 9 strömen muss, sind die Eintrittskanäle 21 an der Eintrittsfläche 17 offen und an der Austrittsfläche 19 verschlossen. Die sogenannten Austrittskanäle 23 sind an der Eintrittsfläche 17 verschlossen und an der Austrittsfläche 19 offen. Die Verschlüsse der Eintrittskanäle 21 und der Austrittskanäle 23 sind in Figur 1 als schwarze Flächen ohne Bezugszeichen dargestellt.

Das in Figur 1 in einem Teilschnitt dargestellte Muster von jeweils einem Eintrittskanal 21, der sich mit einem Austrittskanal 23 abwechselt, setzt sich über die gesamte Querschnittsfläche des Filterelements in an sich bekannter Weise fort.

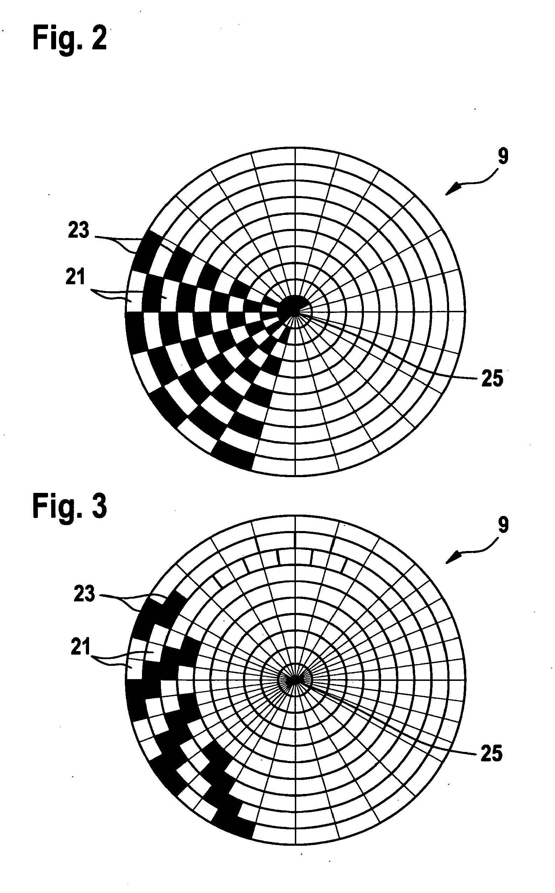

Figur 2 zeigt einen Querschnitt durch ein Ausführungsbeispiel eines erfindungsgemäßen Filterelements 9.

Das in Figur 2 dargestellte Ausführungsbeispiel hat einen kreisrunden Querschnitt und ist zentralsymmetrisch bezüglich der Längsachse 25. Da ein Filterelement 9 eine große Zahl von Kanälen aufweist, die zentralsymmetrisch zu der Längsachse 25 angeordnet sind, wurde aus Gründen der Übersichtlichkeit darauf verzichtet, alle Kanäle im Querschnitt einzuzeichnen. Die Eintrittkanäle 21 sind als weiße Fläche eingezeichnet, während die Austrittskanäle 23 als schwarze Fläche eingezeichnet sind.

Es versteht sich jedoch von selbst, dass die gesamte Querschnittsfläche des Filterelements 9 von Kanälen 21 und 23 durchzogen ist. Eine funktionelle Beschreibung der Eintrittskanäle 21 und der Austrittskanäle 23 wurde bereits im Zusammenhang.mit der Figur 1 gegeben und es wird darauf, noch einmal explizit verwiesen.

Aus Figur 2 ist ersichtlich, dass über den ganzen Querschnitt des ersten Ausführungsbeispiels eines erfindungsgemäßen Filterelements 9 jeweils ein Eintrittskanal 21 benachbart zu einem Austrittskanal 23 angeordnet ist. Dies gilt auch bezüglich der Eintrittskanäle und Austrittskanäle 23 im Außenbereich des Filterelements 9, die eine gegenüber den anderen Eintrittskanälen 21 und Austrittskanälen 23 deutlich vergrößerten Querschnittsfläche aufweisen. Die Eintrittskanäle 21 im Bereich der Längsachse 25 sind den Eintrittskanäle 21 am Außendurchmesser des Filterelements 9 geometrisch ähnlich.

Diese äußeren Eintrittskanäle 21 und Austrittskanäle 23 weisen wegen ihrer größeren Querschnittsfläche einen geringeren Strömungswiderstand als die weiter innen angeordneten Eintrittskanäle 21 und Austrittskanäle 23 auf, so dass sich an den äußeren Eintrittskanälen 21 und Austrittskanälen 23 ein höherer Durchsatz von Abgas einstellt. Infolgedessen werden auch die Randbereiche des Filterelements 9 stärker durch das einströmende Abgas aufgeheizt, so dass die Temperatur im Außenbereich des Filterelements 9 durch die Kanäle 21 und 23 mit dem vergrößerten Querschnitt angehoben wird. Dies bedeutet bei gleicher durch das zuströmende Abgas zugeführter Wärmeleistung auch, dass die Temperatur im Inneren des Filterelements, das heißt in unmittelbarer Nähe der Längsachse 25 reduziert und so die Gefahr von örtlichen Überhitzungen im Inneren des Filterelements 9 verringert wird.

In Figur 3 ist ein zweites Ausführungsbeispiel eines erfindungsgemäßen Filterelements 9 dargestellt, bei dem die radial verlaufenden Filterwände (ohne Bezugszeichen) versetzt zueinander angeordnet sind. Dadurch wird das Filterelement 9 in radialer Richtung flexibler, so dass die aus lokalen Temperaturunterschieden resultierenden Wärmespannungen reduziert werden.

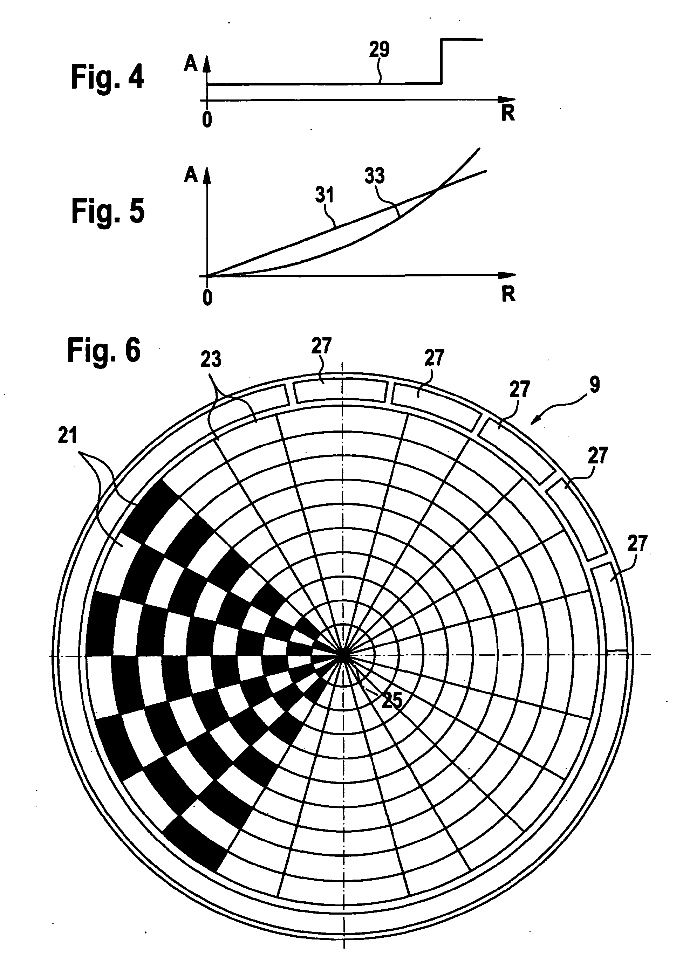

In Figur 4 ist in Diagrammform die Querschnittfläche A der Kanäle 21 und 23 über den Radius R in Form einer ersten Linie 29 aufgetragen. Diese erste Linie 29 hat einen treppenförmigen Verlauf mit einer Stufe und stellt somit den Zusammenhang zwischen der Querschnittsfläche A und dem Abstand der Kanäle 21 und 23 in Abhängigkeit gemäß dem in Figur 2 dargestellten Ausführungsbeispiel dar.

Alternativ wäre es auch möglich, wie in Figur 5 dargestellt, einen linearen Zusammenhang gemäß der zweiten Linie 31 zwischen der Querschnittsfläche A und dem Radius R oder einen nicht linearen Zusammenhang gemäß der dritten Linie 33 vorzusehen. Welcher dieser in den Figuren 4 und 5 dargestellten qualitativen Zusammenhänge zwischen Querschnittsfläche A und Radius R im Einzelfall der Vorzug gegeben wird, hängt von den Umständen des Einzelfalls ab.

Bei dem Ausführungsbeispiel gemäß Figur 6 sind am Außendurchmesser des Filterelements 9 eine Reihe von sogenannten Blindkanälen 27, von denen nicht alle dargestellt sind, vorgesehen. Die Blindkanäle 27 sind sowohl an der Eintrittsfläche 17 als auch an der Austrittsfläche 19 verschlossen, so dass sie nicht von dem zu reinigenden Abgas durchströmt werden können. Es befindet sich vielmehr mehr oder minder reine Luft in diesen Blindkanälen 27. Aus Gründen der Übersichtlichkeit sind auch hier nur einige Blindkanäle 27 exemplarisch dargestellt und zwar über einen Umfangswinkel von etwa 90° im ersten Quadranten. Es versteht sich jedoch von selbst, dass auch in.den übrigen Quadranten ebenfalls Blindkanäle 27 vorgesehen sind.

Da Luft ein schlechter Wärmeleiter ist, wirkt der an der Peripherie des Filterelements 9 vorhandene Mantel aus Blindkanälen 27 als Wärmedämmung, so dass die Wärmeabfuhr nach außen durch die Blindkanäle 27 reduziert wird. Auch dadurch wird eine Temperaturanhebung im Außenbereich des Filterelements 9 bewirkt, so dass die gewünschte Vergleichmäßigung der Temperaturen über den gesamten Querschnitt des Filterelements weiter verbessert wird.

Es versteht sich von selbst, dass die erfindungsgemäße Anordnung verschiedener Eintrittskanälen 21, Austrittskanälen 23 und/oder von Blindkanälen 27 an der Peripherie des Filterelements 9 nicht auf zylindrische Filterelemente 9 beschränkt ist, sondern beispielsweise auch auf Filterelemente 9 übertragbar ist, die einen quadratischen oder rechteckigen Querschnitt haben.

Auch ist die Form der Querschnittsfläche der Eintrittskanäle 21, der Austrittskanäle und der Blindkanäle 27, die im dargestellten Beispiel in erster Näherung einem Rechteck entsprechen, nicht Voraussetzung für ein erfindungsgemäßes Filterelement. Es sind beispielsweise auch sechseckige, kreuzförmige oder andere Formen von Querschnittsflächen möglich.

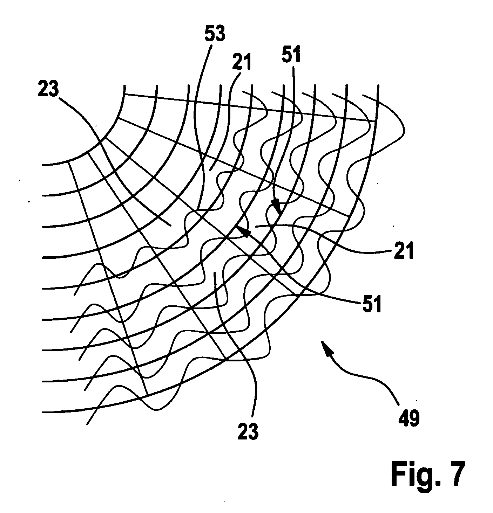

In einer weiteren Ausführungsform der Erfindung können die Filterwände, d.h. die Wände der Filterkanäle, strukturiert sein. Insbesondere die stromaufwärts gelegenen Oberflächen der Einlasskanäle sind beispielsweise zumindest bereichsweise mit wellenartigen Erhebungen versehen. Mit anderen Worten: Die Steigung der Oberfläche ist nur in einer Richtung von der Steigung der Ebene unterschiedlich, in der die Wand insgesamt liegt, wohingegen sie in einer hierzu orthogonalen Richtung auch in den unebenen Bereichen der Steigung der Ebene, in der die Wand insgesamt liegt, entspricht. Durch eine wellenartige Auslegung ist es möglich, die effektive Filterfläche zu erhöhen und somit die Filtereigenschaften zu verbessern, insbesondere einen im Kraftfahrzeugbetrieb resultierenden Abgasgegendruck abzusenken. Dabei wird das Filtersubstrat beim Herstellungsprozess, beispielsweise bei einer Extrusion, derart hergestellt, dass die radialen und/oder die konzentrisch angeordneten Kanalwände eine Wellenstruktur aufweisen. Figur 7 zeigt in einer schematischen Teilansicht (Viertelausschnitt) im Querschnitt ein solches alternatives Filterelement 49, bei dem die stromaufwärts gelegenen Oberflächen 51 der Filterwände eine gewellte Struktur 53 aufweisen. Die Darstellung der Struktur 53 mit Wellenlinien symbolisiert hierbei den Ersatz im Wesentlichen, d.h. bis auf im dargestellten Querschnitt konzentrischen Kreisringen folgender, ebener Kanalwände durch Kanalwände, deren Oberflächen, zumindest deren stromaufwärts liegende Oberflächen, eine gewellte Sruktur aufweisen. Die dargestellten Kreisringe markieren somit den mittleren Abstand der jeweiligen Kanalwand zur Längsachse des Filterelements. Diese gewellte Struktur ist in Figur 7 für die konzentrischen Kanalwände dargestellt, kann alternativ oder in Kombination auch für in radialer Richtung angeordnete Kanalwände vorgesehen werden. Die Wellung erfolgt (bis auf die äußerste Wand) vorzugsweise sinusförmig, alternativ mit anderen regelmässigen Wellenformen, um die gedachte radiale bzw. konzentrische Ideallinie herum. Die Amplitude A (Abstand des Wellenbergs bzw. des Wellentals zur Ideallinie) dieser Welle liegt im Bereich von 0,1 bis 0,5 Millimeter, vorzugsweise in einem Bereich von 0,1 bis 0,3 Millimeter. Die Periode P dieser Welle liegt im Bereich von 0,1 bis 0,5 Millimeter. Das Verhältnis von Amplitudenhöhe zu Periodenlänge A/P liegt vorzugsweise in einem Bereich von 0,2 bis 3,0. Mit solchermassen gewellten Oberflächenstrukturen haben die Filterkanäle, insbesondere die Einlasskanäle, im Vergleich zu ungewellten. Filterkanälen rechteckigen oder nahezu rechteckigen Querschnitts und mit gleicher Querschnittsfläche einen größeren Umfang und somit eine größere Filtrationsfläche.

## Patentansprüche

1. Filterelement zur Filterung von Russ, insbesondere zur Filterung von Abgasen einer Dieselbrennkraftmaschine, mit einer parallel zur Hauptströmungsrichtung des Abgases verlaufenden Längsachse (15), mit einer Vielzahl von parallel zur Längsachse (15) verlaufenden Einlasskanälen (21), und mit einer Vielzahl von parallel zur Längsachse (25) verlaufenden Auslasskarlälen (23), wobei die Einlasskanäle (21) an einer Eintrittsfläche (17) des Filterelements (9) beginnen und an einer Austrittsfläche (19) des Filterelements (9) verschlossen sind, und wobei die Auslasskanäle (23) an der Eintrittsfläche (17) verschlossen sind und an der Austrittsfläche (19) enden, wobei die außen an dem Filterelement (9) angeordneten Kanäle (21, 23) eine größere Querschnittsfläche als die zentral angeordneten Kanäle (21, 23) aufweisen, **dadurch gekennzeichnet, dass** die Querschnittsfläche der Eintrittskanäle (21) größer ist als die Querschnittsfläche der Austrittskanäle (23) mit gleichem Abstand (R) zur Längsachse (25) des Filterelements (9).

2. Filterelement nach Anspruch 1, **dadurch gekennzeichnet, dass** außen an dem Filterelement (9) Blindkanäle (27) angeordnet sind, und dass die Blindkanäle (27) an beiden Enden verschlossen sind.

3. Filterelement nach Anspruch 2, **dadurch gekennzeichnet, dass** am Außendurchmesser des Filterelements (9) bis zu fünf Lagen von beidseitig verschlossenen Blindkanälen (27), bevorzugt eine bis drei Lagen von beidseitig verschlossenen Blindkanälen (27), vorgesehen sind.

4. Filterelement nach einem der vorhergehenden Ansprüche, **dadurch gekennzeichnet, dass** die im Wesentlichen radial verlaufenden Wände zwischen zwei benachbarten Kanälen (21, 23, 27) versetzt zueinander angeordnet sind.

5. Filterelement nach einem der vorhergehenden Ansprüche, **dadurch gekennzeichnet, dass** die Querschnittsfläche der Kanäle (21, 23, 27) mit zunehmendem Abstand (R) zur Längsachse (25) des Filterelements (9) monoton zunimmt.

6. Filterelement nach einem der Ansprüche 1 bis 4, **dadurch gekennzeichnet, dass** die Querschnittsfläche der Kanäle (21, 23, 27) mit zunehmendem Abstand (R) zur Längsachse (25) des Filterelements (9) in einer oder mehreren Stufen zunimmt.

7. Filterelement nach einem der vorhergehenden Ansprüche, **dadurch gekennzeichnet, dass** die Querschnittsfläche der Eintrittskanäle (21) um einen Faktor zwischen 1,1 und 2,0, bevorzugt zwischen 1,1, und 1,7 größer als die Querschnittsfläche der Austrittskanäle (23) mit gleichem Abstand (R) zur Längsachse ist.

8. Filterelement nach einem der vorhergehenden Ansprüche, **dadurch gekennzeichnet, dass** das Filterelement (9) rotationssymmetrisch oder zentralsymmetrisch bezüglich seiner Längsachse (25) ist.

9. Filterelement nach einem der vorhergehenden Ansprüche, **dadurch gekennzeichnet, dass** die stromaufwärts gelegene Oberfläche mindestens einer Filterwand , insbesondere einer Filterwand eines Einlasskanals, wenigstens bereichsweise uneben ist.

10. Filterelement nach Anspruch 9, **dadurch gekennzeichnet, dass** die Oberfläche mindestens bereichsweise wellenartige Erhebungen aufweist.

11. Filterelement nach Anspruch 10, **dadurch gekennzeichnet, dass** die wellenartigen Erhebungen dreieckigen und/oder sinusförmigen Querschnitt aufweist.

12. Filterelement nach Anspruch 10 oder 11, **dadurch gekennzeichnet, dass** das Verhältnis (A/P) zwischen einer Amplitude 8A) und einer Periode (P) der Erhebungen ungefähr zwischen 0,2 und 3 liegt.

13. Filterelement nach einem der Ansprüche 9 bis 12, **dadurch gekennzeichnet, dass** die Oberfläche mindestens bereichsweise hügelige Erhebungen aufweist.

14. Rußfilter mit einem Filterelement (9), mit einem Gehäuse (7), mit einer Zuleitung (3) und mit einer Ableitung, (15), **dadurch gekennzeichnet, dass** das Filterelement ein Filterelement (9) nach einem der vorhergehenden Ansprüche ist.

## Claims

1. Filter element for filtering soot, in particular for filtering exhaust gases of a diesel internal combustion engine, having a longitudinal axis (25) which runs parallel to the main flow direction of the exhaust gas, having a multiplicity of inlet ducts (21) which run parallel to the longitudinal axis (25), and having a multiplicity of outlet ducts (23) which run parallel to the longitudinal axis (25), wherein the inlet ducts (21) begin at an inlet surface (17) of the filter element (9) and are closed off at an outlet surface (19) of the filter element (9), and wherein the outlet ducts (23) are closed off at the inlet surface (17) and end at the outlet surface (19), wherein the ducts (21, 23) arranged at the outside on the filter element (9) have a larger cross-sectional area than the centrally arranged ducts (21, 23), **characterized in that** the cross-sectional area of the inlet ducts (21) is larger than the cross-sectional area of the outlet ducts (23) at the same distance (R) from the longitudinal axis (25) of the filter element (9).

2. Filter element according to Claim 1, **characterized in that** blind ducts (27) are arranged at the outside on the filter element (9), and **in that** the blind ducts (27) are closed off at both ends.

3. Filter element according to Claim 2, **characterized in that** up to five layers of blind ducts (27) which are closed off at both ends, preferably one to three layers of blind ducts (27) which are closed off at both ends, are provided at the outer diameter of the filter element (9).

4. Filter element according to one of the preceding claims, **characterized in that** the substantially radially running walls between two adjacent ducts (21, 23, 27) are arranged offset with respect to one another.

5. Filter element according to one of the preceding claims, **characterized in that** the cross-sectional area of the ducts (21, 23, 27) increases monotonously with increasing distance (R) from the longitudinal axis (25) of the filter element (9).

6. Filter element according to one of Claims 1 to 4, **characterized in that** the cross-sectional area of the ducts (21, 23, 27) increases monotonously in one or more steps with increasing distance (R) from the longitudinal axis (25) of the filter element (9).

7. Filter element according to one of the preceding claims, **characterized in that** the cross-sectional area of the inlet ducts (21) is larger than the cross-sectional area of the outlet ducts (23) at the same distance (R) from the longitudinal axis by a factor of between 1.1 and 2.0, preferably between 1.1 and 1.7.

8. Filter element according to one of the preceding claims, **characterized in that** the filter element (9) is rotationally symmetrical or centrally symmetrical about its longitudinal axis (25).

9. Filter element according to one of the preceding claims, **characterized in that** the upstream surface of at least one filter wall, in particular of a filter wall of an inlet duct, is uneven at least in regions.

10. Filter element according to Claim 9, **characterized in that** the surface has undulating elevations at least in regions.

11. Filter element according to Claim 10, **characterized in that** the undulating elevations have a triangular and/or sinusoidal cross section.

12. Filter element according to Claim 10 or 11, **characterized in that** the ratio (A/P) between an amplitude (A) and a period (P) of the elevations lies approximately between 0.2 and 3.

13. Filter element according to one of Claims 9 to 12, **characterized in that** the surface has hill-like elevations at least in regions.

14. Soot filter having a filter element (9), having a housing (7), having an inlet line (3) and having an outlet line (15), **characterized in that** the filter element is a filter element (9) according to one of the preceding claims.

## Revendications

1. Elément filtrant pour la filtration de suie, en particulier pour la filtration de gaz d'échappement d'un moteur à combustion interne diesel, comprenant un axe longitudinal (25) s'étendant parallèlement à la direction d'écoulement principale du gaz d'échappement, une pluralité de conduits d'admission (21) s'étendant parallèlement à l'axe longitudinal (25), et une pluralité de conduits de sortie (23) s'étendant parallèlement à l'axe longitudinal (25), les conduits d'admission (21) commençant au niveau d'une surface d'entrée (17) de l'élément filtrant (9) et étant fermés au niveau d'une surface de sortie (19) de l'élément filtrant (9), et les conduits de sortie (23) étant fermés au niveau de la surface d'entrée (17) et se terminant au niveau de la surface de sortie (19), les conduits (21, 23) disposés à l'extérieur au niveau de l'élément filtrant (9) présentant une surface en section transversale plus grande que les conduits (21, 23) disposés centralement, **caractérisé en ce que** la surface en section transversale des conduits d'entrée (21) est plus grande que la surface en section transversale des conduits de sortie (23) à la même distance (R) par rapport à l'axe longitudinal (25) de l'élément filtrant (9).

2. Elément filtrant selon la revendication 1, **caractérisé en ce que** des conduits borgnes (27) sont disposés à l'extérieur au niveau de l'élément filtrant (9), et **en ce que** les conduits borgnes (27) sont fermés aux deux extrémités.

3. Elément filtrant selon la revendication 2, **caractérisé en ce que** l'on prévoit sur le diamètre extérieur de l'élément filtrant (9) jusqu'à cinq couches de conduits borgnes (27) fermés des deux côtés, de préférence de une à trois couches de conduits borgnes (27) fermés des deux côtés.

4. Elément filtrant selon l'une quelconque des revendications précédentes, **caractérisé en ce que** les parois s'étendant sensiblement radialement entre deux conduits adjacents (21, 23, 27) sont disposées de manière décalée les unes par rapport aux autres.

5. Elément filtrant selon l'une quelconque des revendications précédentes, **caractérisé en ce que** la surface en section transversale des conduits (21, 23, 27) augmente de manière monotone avec l'augmentation de la distance (R) à l'axe longitudinal (25) de l'élément filtrant (9).

6. Elément filtrant selon l'une quelconque des revendications 1 à 4, **caractérisé en ce que** la surface en section transversale des conduits (21, 23, 27) augmente avec l'augmentation de la distance (R) à l'axe longitudinal (25) de l'élément filtrant (9) en un ou plusieurs gradins.

7. Elément filtrant selon l'une quelconque des revendications précédentes, **caractérisé en ce que** la surface en section transversale des conduits d'entrée (21) est plus grande d'un facteur compris entre 1,1 et 2,0, de préférence entre 1,1 et 1,7, que la surface en section transversale des conduits de sortie (23) à la même distance (R) de l'axe longitudinal.

8. Elément filtrant selon l'une quelconque des revendications précédentes, **caractérisé en ce que** l'élément filtrant (9) a une symétrie de révolution ou une symétrie centrale par rapport à son axe longitudinal (25).

9. Elément filtrant selon l'une quelconque des revendications précédentes, **caractérisé en ce que** la surface située en amont d'au moins une paroi du filtre, notamment une paroi du filtre d'un conduit d'admission, est inégale au moins dans certaines parties.

10. Elément filtrant selon la revendication 9, **caractérisé en ce que** la surface présente, au moins dans certaines parties, des rehaussements de forme ondulée.

11. Elément filtrant selon la revendication 10, **caractérisé en ce que** les rehaussements de forme ondulée présentent une section transversale triangulaire et/ou sinusoïdale.

12. Elément filtrant selon la revendication 10 ou 11, **caractérisé en ce que** le rapport (A/P) entre une amplitude (A) et une période (P) des rehaussements est approximativement compris entre 0,2 et 3.

13. Elément filtrant selon l'une quelconque des revendications 9 à 12, **caractérisé en ce que** la surface présente au moins dans certaines parties des rehaussements mamelonnés.

14. Filtre à suie avec un élément filtrant (9), avec un boîtier (7), une conduite d'amenée (3) et une conduite d'évacuation (15), **caractérisé en ce que** l'élément filtrant est un élément filtrant (9) selon l'une quelconque des revendications précédentes.
